# EUROPÄISCHE PATENTANMELDUNG

(11) **EP 2 573 928 A1**
(43) Veröffentlichungstag der Anmeldung: **27.03.2013**
(21) Anmeldenummer: 11182765.5
(22) Anmeldetag: 26.09.2011
(51) Int. Cl.: H02M 7/5387, H02M 1/32, H02H 9/00

(54) **Überstrombegrenzung und Rückstromsperre in einem Zwischenkreisumrichter zur Ansteuerung einer Wechselstrommaschine**

(71) Anmelder: Brusa Elektronik AG, 9466 Sennwald (CH)
(72) Erfinder: Mathoy, Arno, 9472 Grabs (CH); Matt, Phillipp, 6820 Frastanz (AT)
(74) Vertreter: Patentbüro Paul Rosenich AG

(57) **Zusammenfassung**

Es wird ein Umrichter (1a..1 h) zur Ansteuerung einer Wechselstrommaschine (3) angegeben, welcher wenigstens einen Zwischenkreiskondensator (5),
zumindest ein erstes Schaltelement (6a, 6b) in einer Zuleitung zum Zwischenkreis und ein strombegrenzendes Element (7, 11) parallel zum ersten Schaltelement (6a, 6b) umfasst. Zusätzlich weist der Umrichter (1 a..1 h) ein Sperrelement (8, 12) in Serie zum strombegrenzenden Element (7, 11) auf, welches dazu eingerichtet ist, einen Energiefluss von der Wechselstrommaschine (3) zu einer den Umrichter (1a..1h) versorgenden Spannungsquelle (2) zu verhindern.

## Beschreibung

Die Erfindung betrifft einen Umrichter zur Ansteuerung einer Wechselstrommaschine, welcher wenigstens einen Zwischenkreiskondensator, zumindest ein erstes Schaltelement in einer Zuleitung zum Zwischenkreis und ein strombegrenzendes Element parallel zum ersten Schaltelement umfasst.

Umrichter zur Ansteuerung einer Wechselstrommaschine sind weithin bekannt und werden beispielsweise in der industriellen Antriebstechnik, zunehmend aber auch im Automobilbau zur Steuerung eines Antriebsmotors eines Elektroautos eingesetzt.

Gesetzliche Vorgaben fordern, dass von der Funktion bzw. Fehlfunktion eines elektrisch/elektronischen Systems in Fahrzeugen/Anlagen keine Gefahr für Menschen in der Umgebung ausgeht. Beispielsweise wurde für den Automobilbau dazu die Norm ISO26262 (abgeleitet von der IEC 61508) erlassen. Aber auch für Bahn, Luftfahrt, usw. wurden entsprechende Werke verfasst. Da eine Fehlfunktion bzw. Ausfall einer Funktion nie gänzlich ausgeschlossen werden kann, wird in der Regel ein sogenannter "Sicherer Zustand" definiert, in dem das System keine Gefahr mehr darstellen kann.

Ein solcher Sicherer Zustand sollte wenn möglich energielos eingeleitet und aufrechterhalten werden können, sodass er bei Wegfall einer Energieversorgung des zu sichernden Gerätes automatisch eingeleitet und aufrechterhalten wird. Konkret sollte eine Beschädigung des Umrichters, sowie der daran angeschlossenen Wechselstrommaschine und der versorgenden Spannungsquelle verhindert werden. Eine Verschmelzung von Systemgrenzen zwischen Spannungsquelle, Umrichter und Wechselstrommaschine ist zu vermeiden.

Eine Möglichkeit zur Einleitung eines Sicheren Zustands ist das einfache Abschalten, die Sternpunkttrennung oder der aktive Kurzschluss, bei dem die Motorwicklungen im Umrichter oder in der Nähe des Motors kurzgeschlossen werden. Für diesen zumeist gewählten Ansatz des aktiven Kurzschlusses werden aus Kostengründen in der Regel die Halbleiterschalter der Endstufe des Umrichters verwendet. Ein Nachteil dieser Lösung ist, dass das Einleiten des Sicheren Zustands unter Umständen von defekten Halbleiterschaltern abhängt, beispielsweise wenn die genannte Endstufe selbst Ursache für die Einleitung des Sicheren Zustands ist. Wie für den Fachmann leicht einsehbar ist, kann die Erreichung eines Sicheren Zustands somit nicht garantiert werden.

Weitere Nachteile herkömmlicher Methoden sind, dass das Einleiten und Halten des Sicheren Zustandes in der Regel Energie benötigt, dass die kurzzeitig auftretenden Kurschlussströme so hoch sein können, dass eine Beschädigung des Umrichters und der Wechselstrommaschine nicht ausgeschlossen werden kann und die daraus resultierenden Drehmoment-Spitzen ein der Wechselstrommaschine nachgeschaltetes Getriebe zerstören können. Bei der Sternpunkttrennung wird zudem die doppelte Anzahl an Zuleitungen vom Umrichter zur Wechselstrommaschine benötigt, was erheblich Kosten verursacht. Ausserdem befinden sich zusätzlich aktive Elemente (Schütz, Ansteuerung, usw.) in der Wechselstrommaschine, wodurch die Herstellung derselben erschwert wird und keine Standard-Wechselstrommaschinen verwendet werden können. Insbesondere ist der Sichere Zustand in der Regel auf einen Maschinentyp und eine Maschinedimensionierung ausgelegt.

Eine weitere Möglichkeit zur Erlangung eines sicheren Zustands besteht darin, die Spannungsquelle vom Umrichter zu trennen. Nachteilig ist dabei, dass zusätzliche Schaltelemente nötig sind, an denen im Fall von Halbleiterschaltern zudem vergleichsweise hohe Dauerverluste entstehen.

Des Weiteren ist eine Vorladeschaltung für einen Kondensator im Zwischenkreis des Umrichters zu implementieren, da unterschiedliche Spannungsniveaus der Spannungsquelle und des Kondensators ohne zusätzliche Massnahmen beim Anschalten zu sehr hohen Stromspitzen führen können. Dadurch kann aber auch bei offenen Schaltelementen eine elektrische Verbindung zwischen Spannungsquelle und Umrichter und somit auch zur Wechselstrommaschine gegeben sein.

Eine solche Vorladeschaltung findet sich beispielsweise in der JP 2001245401 A, bei der ein Widerstand parallel zu einem Schaltelement angeordnet ist und so einen übermässigen Stromfluss zwischen Spannungsquelle und Zwischenkreiskondensator verhindert. Nachteilig daran ist, dass ein Energiefuss von der Wechselstrommaschine (im generatorischen Betrieb) zur Spannungsquelle auch bei offenem Schaltelement möglich ist. Dies kann zu Schäden an der Spannungsquelle führen.

Aus der US 5,127,085 A ist zudem bekannt, dass die Zwischenkreisspannung über einen schaltbaren Widerstand abgebaut werden kann.

Ganz generell ergibt sich bei bekannten Lösungen auch dadurch ein Problem, dass die Systemgrenzen zwischen Batterie, Umrichter und Wechselstrommaschine ineinander verschwimmen und somit keine strenge Trennung der genannten Komponenten existiert. Beispielsweise sind für die Sternpunkttrennung wie bereits erwähnt Komponenten im Umrichter und in der Wechselstrommaschine nötig. Bei der Trennung der Spannungsquelle wird dagegen zusätzlich auf Schaltelemente in derselben zugegriffen. Dies führt dazu, dass Komponenten untereinander kaum austauschbar sind, da nach dem Stand der Technik immer das Gesamtsystem, umfassend die Spannungsquelle, den Umrichter und die Wechselstrommaschine entsprechend gestaltet werden muss. Dies führt zu enormen Entwicklungs- und Herstellungskosten.

Aufgabe der Erfindung ist es nun, einen verbesserten Umrichter anzugeben, bei dem die zuvor genannten Nachteile überwunden werden. Insbesondere soll ein sicherer Zustand eines Antriebssystems erreicht werden ohne dadurch die Austauschbarkeit der daran beteiligten Komponenten zu beeinträchtigen.

Erfindungsgemäss wird diese Aufgabe durch einen Umrichter der eingangs genannten Art gelöst, bei dem ein Sperrelement in Serie zum strombegrenzenden Element vorgesehen ist, welches dazu eingerichtet ist, einen Energiefluss von der Wechselstrommaschine zu einer den Umrichter versorgenden Spannungsquelle zu verhindern.

Auf diese Weise wird die Spannungsquelle bei offenen Schaltelementen vor einer Beschädigung durch einen Energiefluss von der Wechselstrommaschine geschützt. Da alle hierfür erforderlichen Komponenten im Umrichter angeordnet sind und weder in der Spannungsquelle noch in der Wechselstrommaschine Vorkehrungen zu treffen sind, ist zudem die Austauschbarkeit von Spannungsquelle, Umrichter und Wechselstrommaschine gewährleistet. Durch strenge Einhaltung der Systemgrenzen werden daher sowohl die Entwicklungs- als auch die Produktionskosten für ein Antriebssystem drastisch gesenkt. Die Erfindung ist dabei sowohl für permanent- und fremderregte Synchronmaschinen als auch für Asynchronmaschinen einsetzbar.

Der sichere Zustand wird durch Trennen des Umrichters vom Zwischenkreis erreicht. Einerseits wird dadurch kein zu grosses unerwünschtes motorisches (beschleunigendes) Drehmoment an der elektrischen Maschine erzeugt, da der Leistungsfluss von der Spannungsquelle zur elektrischen Maschine unterbrochen wird. Das strombegrenzende Element sollte dazu entsprechend dimensioniert sein. Andererseits wird auch kein zu grosses unerwünschtes generatorisches (bremsendes) Drehmoment an der elektrischen Maschine erzeugt, da das Sperrelement einen Stromfluss zur Spannungsquelle verhindert. Das "passive Rückspeisen", bei dem Energie von der elektrischen Maschine aufgrund der Elektromotorischen Kraft (EMK) über die antiparallelen Dioden der Halbleiterschalter im Umrichter zurück zur Spannungsquelle fliesst, wird also unterbunden. Dieses passive Rückspeisen kann - wenn keine Vorkehrungen dagegen getroffen werden - gefährliche Fahrzustände hervorrufen, wenn ein mit einer solchen elektrischen Maschine angetriebenes Fahrzeug unvermittelt und heftig verzögert wird.

Vorteilhafte Ausgestaltungen und Weiterbildungen der Erfindung sind in den Unteransprüchen sowie in der Beschreibung in Zusammenschau mit den Figuren offenbart.

Günstig ist es, wenn in beiden Zuleitungen zum Zwischenkreis erste Schaltelemente vorgesehen sind. Auf diese Weise kann die Spannungsquelle vom Umrichter allpolig getrennt werden.

Günstig ist es auch, wenn eine Serienschaltung umfassend das strombegrenzende Element und das genannten Sperrelement lediglich in einer Zuleitung zum Zwischenkreis vorgesehen ist. Auf diese Weise kann der Schaltungsaufwand für den Umrichter gering gehalten werden.

Vorteilhaft ist es, wenn eine Serienschaltung umfassend das strombegrenzende Element und das genannten Sperrelement parallel zu einer Serienschaltung mehrerer erster Schaltelemente vorgesehen ist. Bei dieser Variante kann die Spannungsquelle auch dann noch sicher vom Umrichter getrennt werden, wenn wenigstens eines der ersten Schaltelemente funktionstüchtig ist. Diese Variante des Umrichters ist daher besonders sicher.

Besonders vorteilhaft ist es darüber hinaus, wenn das genannte Sperrelement als Diode ausgeführt ist. Dadurch kann der Energiefluss von der Wechselstrommaschine zur Spannungsquelle auf sehr einfache Weise verhindert werden. Die Erfindung kann somit gut in die Praxis umgesetzt werden.

Besonders vorteilhaft ist es auch, wenn das genannte Sperrelement als zweites Schaltelement ausgeführt ist. Dadurch kann nicht nur der Energiefluss von der

Wechselstrommaschine zur Spannungsquelle vermieden sondern auch der Spannungsausgleich zwischen Spannungsquelle und Zwischenkreiskondensator gesteuert werden.

Günstig ist es, wenn das erste Schaltelement und/oder das zweite Schaltelement als Relais (Schütze) ausgeführt ist. Auf diese Weise kann die Spannungsquelle galvanisch vom Umrichter getrennt und der "sichere Zustand" energielos aufrecht erhalten werden. Zudem weisen Relais nur einen sehr kleinen Widerstand im leitenden Zustand auf, wodurch die Verluste im Umrichter gering gehalten werden können.

Günstig ist es zudem, wenn das erste Schaltelement und/oder das zweite Schaltelement als Halbleiterschalter ausgeführt ist. Dadurch können bewegliche Teile im Umrichter weitgehend vermieden werden, wodurch dieser besonders robust ist. Zusätzlich ist die Reaktions- und Schaltzeit von Halbleiterschaltern in der Regel wesentlich kürzer als jene von mechanischen Schaltern.

Günstig ist es weiterhin, wenn das erste Schaltelement als pyrotechnischer Sicherheitsschalter (PSS) ausgeführt ist. Diese Schalter weisen keinen Schaltkontakt im herkömmlichen Sinn auf, sondern einen durchgehenden Leiter, welche bei Aktivierung mit Hilfe einer Sprengladung durchtrennt wird. Folglich fällt am pyrotechnischen Sicherheitsschalter nur eine sehr kleine Spannung ab, wodurch Verluste gering gehalten werden können. Weitere Vorteile pyrotechnischer Sicherheitsschalter sind, dass sie einen Stromfluss sehr schnell und mit hoher Sicherheit trennen.

Günstig ist es, wenn das strombegrenzende Element als Widerstand ausgeführt ist. Ein ohmscher Widerstand ist ein vergleichsweise einfach aufgebautes Element zur Begrenzung eines Stroms. Die Erfindung kann somit leicht in die Praxis umgesetzt werden.

Günstig ist es auch, wenn das strombegrenzende Element als Kaltleiter ausgeführt ist. Kaltleiter beziehungsweise PTC-Widerstände (Positive Temperature Coefficient) sind Bauelemente, die bei tieferen Temperaturen den Strom besser leiten können als bei hohen. Ihr elektrischer Widerstand vergrössert sich also bei steigender Temperatur. Beim Normalbetrieb fliesst über den PTC nur fallweise ein Ausgleichstrom. Im Fehlbetrieb, z.B. wenn der Kondensator defekt ist oder bei einem Kurzschluss, tritt ein Stromfluss dagegen häufiger auf und/oder es tritt ein erhöhter Stromfluss auf, was zu Erwärmung des PTCs führt und dadurch die Leitfähigkeit reduziert. Auf diese Weise wird der PTC vor Beschädigungen geschützt.

Günstig ist es schliesslich, wenn der Umrichter eine Serienschaltung, umfassend ein drittes Schaltelement und ein strombegrenzendes Element, parallel zum Zwischenkreiskondensator umfasst. Auf diese Weise kann der Zwischenkreis kurzgeschlossen werden, beziehungsweise werden auch die Wicklungen der Wechselstrommaschine über die antiparallelen Dioden im Umrichter kurzgeschlossen. Auf diese Weise wird der Umrichter vor den teilweise sehr hohen EMK-Spannungen (Elektromotorische Kraft) der Maschine geschützt. Diese Anordnung ist daher dann besonders vorteilhaft, wenn die maximale EMK-Spannung den Umrichter zerstören könnte. Das resultierende Bremsmoment bei permanent und/oder fremderregten Wechselstrommaschinen hat darüber hinaus ein Maximum bei sehr kleinen Drehzahlen. Ist der genannte Umrichter in ein Fahrzeug eingebaut, so wird dieses bei Einleiten eines sicheren Zustands daher vergleichsweise gering und erst allmählich stärker verzögert, wodurch gefährliche Fahrsituationen vermieden werden.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: schematisch eine Variante eines erfindungsgemässen Umrichters mit einem Spannungsausgleichszweig in der positiven Zuleitung zum Zwischenkreis;
- Fig. 2: schematisch eine Variante eines erfindungsgemässen Umrichters mit einem Spannungsausgleichszweig in der negativen Zuleitung zum Zwischenkreis;
- Fig. 3: eine Variante des Umrichters, bei der die Spannungsquelle nur einpolig getrennt wird;
- Fig. 4: eine Variante des Umrichters mit zwei in Serie geschalteten Schaltelementen;
- Fig. 5: eine Variante des erfindungsgemässen Umrichters mit einem Widerstand anstelle eines Kaltleiters und einem Schalter anstelle einer Diode im Spannungsausgleichszweig.
- Fig. 6: eine Variante des Umrichters mit einer Einrichtung zum Kurzschliessen des Zwischenkreises;
- Fig. 7: eine Variante des Umrichters, bei der Halbleiterschalter anstelle von Relais verwendet werden und
- Fig. 8: eine Variante des Umrichters, bei der pyrotechnische Sicherheitsschalter anstelle von Relais verwendet werden.

In den Figuren der Zeichnung sind gleiche und ähnliche Teile mit gleichen Bezugszeichen und funktionsähnliche Elemente und Merkmale - sofern nichts Anderes ausgeführt ist - mit gleichen Bezugszeichen aber unterschiedlichen Indizes versehen.

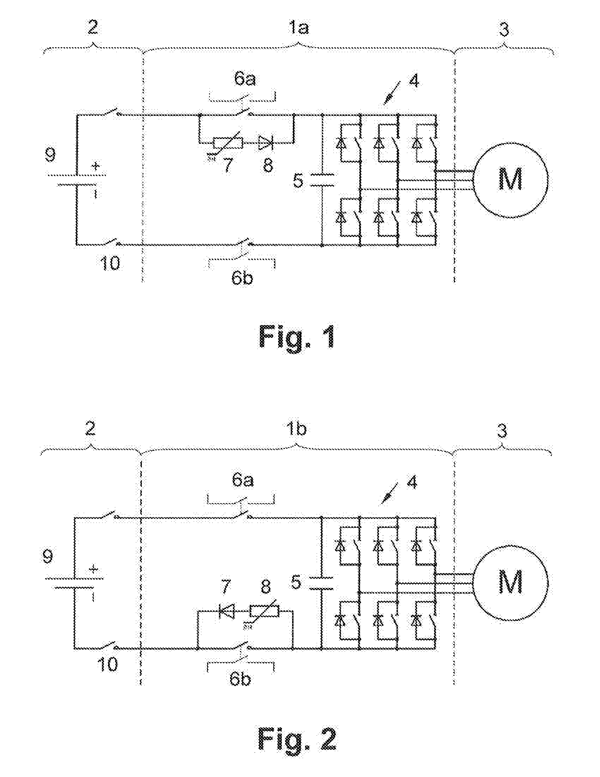

Fig. 1 zeigt einen Umrichter 1a, welcher mit einer Spannungsquelle 2 verbunden und zur Ansteuerung einer Wechselstrommaschine 3 vorbereitet ist. Der Umrichter 1a umfasst in an sich bekannter Weise mehrere Halbbrücken 4 sowie einen Zwischenkreiskondensator 5. Zudem weist der Umrichter 1a zwei erste Schaltelemente in Form von zwei Relais 6a und 6b in einer Zuleitung zum Zwischenkreis sowie ein strombegrenzendes Element, hier konkret ein Kaltleiter oder PTC (Positive Temperature Coefficient) 7 parallel zum Relais 6a auf. Darüber hinaus ist ein Sperrelement in Serie zum strombegrenzenden Element 7 vorgesehen, welches dazu eingerichtet ist, einen Energiefluss von der Wechselstrommaschine 3 zu einer den Umrichter 1a versorgenden Spannungsquelle 2 zu verhindern. Konkret ist das genannte Bauteil als Diode 8 ausgeführt, welche so gepolt ist, dass lediglich ein Stromfluss von der Spannungsquelle 2 zur Wechselstrommaschine 3 möglich ist. Die Spannungsquelle 2 umfasst in diesem Beispiel eine Batterie 9 sowie zwei Schalter 10 in der Zuleitung zum Umrichter 1a.

Die Funktion des in Fig. 1 dargestellten Umrichters 1a ist nun wie folgt, wobei angenommen wird, dass die dargestellte Anordnung in einem Elektroauto verbaut ist: Wird das Elektroauto in Bereitschaft gesetzt, so werden die Schalter 10 geschlossen, sodass die Batteriespannung am Umrichter 1a anliegt. Das Relais 6a bleibt vorerst geöffnet, das Relais 6b geschlossen. Auf diese Weise kann Strom über den Kaltleiter 7 und die Diode 8 zum Zwischenkreiskondensator 5 fliessen und diesen mit einem definierten Strom aufladen, sodass sich die Spannungen der Batterie 2 und des Zwischenkreiskondensators 5 einander angleichen. Wenn die Spannungen einander in ausreichender Weise angeglichen sind (beispielsweise um Funkenbildung an den Schaltkontakten des Relais 6a zu vermeiden), wird das Relais 6a geschlossen.

Tritt nun ein Fehler in der Anordnung auf, welcher beispielsweise mit einer nicht dargestellten aber an sich bekannten Überwachungsschaltung detektiert wird, so wird die Spannungsquelle 2 mit Hilfe der Relais 6a und 6b von der Wechselstrommaschine 3 getrennt. Die Diode 8 verhindert dabei einen Energiefluss von der Wechselstrommaschine 3 zur Spannungsquelle 2, wenn diese in den generatorischen Betriebszustand übergehen sollte. Vorteilhaft sind die Relais 6a und 6b mit einem Arbeitskontakt ausgerüstet, also "normally open" (NO). Auf diese Weise wird garantiert, dass die Spannungsquelle 2 auch dann sicher getrennt wird, wenn keine Energieversorgung der Relais 6a und 6b zur Verfügung steht. Zudem sind die Relais 6a und 6b vorzugsweise mit zwangsgeführten Rückführkontakten ausgestattet, um deren Testbarkeit zu gewährleisten.

Ein weiterer Vorteil des erfindungsgemässen Umrichters 1a besteht darin, dass die Systemgrenzen zwischen dem Umrichter 1a, der Spannungsquelle 2 und der Wechselstrommaschine 3 - hier symbolisiert durch strichlierte Linien - erhalten bleiben. Das heisst, dass die beschriebene Funktionalität alleine im Umrichter 1a abgebildet ist. Auf diese Weise können beispielsweise Komponenten unterschiedlicher Hersteller gut kombiniert werden. Beispielsweise kann die Spannungsquelle 2 wie dargestellt Schalter 10 umfassen, diese können prinzipiell aber auch weggelassen werden, ohne die Funktion des Umrichters 1a zu beeinträchtigen.

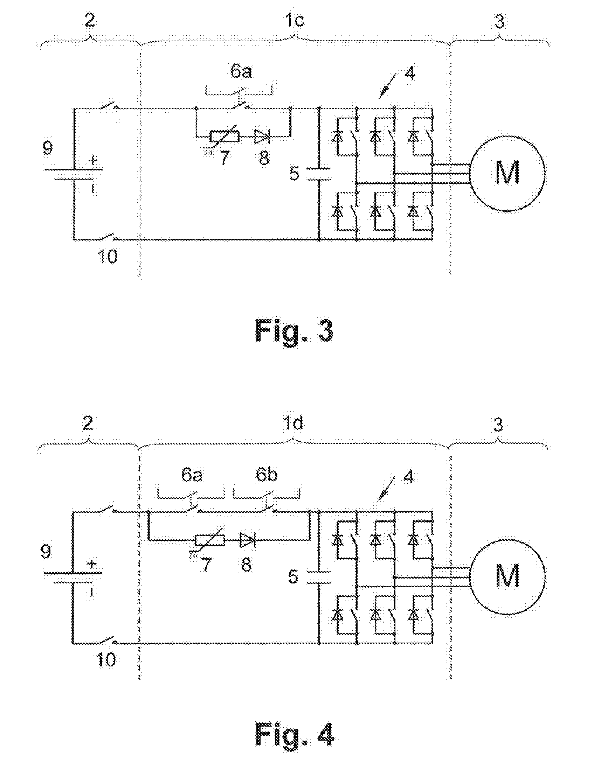

Fig. 2 zeigt nun eine alternative Ausführungsform der Erfindung in Form eines Umrichters 1b, welcher dem Umrichter 1a sehr ähnlich ist. Im Unterschied dazu ist der Kaltleiter 7 und die Diode 8 aber nicht in der positiven Zuführungsleitung zum Zwischenkreiskondensator 5 sondern in der negativen Zuführungsleitung vorgesehen. Fig. 3 zeigt wiederum einen Umrichter 1 c, bei dem gegenüber dem Umrichter 1a das zweite Relais 6b weggelassen wurde, was zu einem vereinfachten Aufbau führt. Selbstverständlich könnte das Relais 6a, der Kaltleiter 7 und die Diode 8 auch in der negativen Zuführungsleitung angeordnet sein.

Fig. 4 zeigt einen Umrichter 1d, bei dem im Unterschied zum Umrichter 1c zwei Relais 6a und 6b in Serie geschaltet sind. Auf diese Weise kann die Sicherheit des Umrichters 1d gesteigert werden, da es unwahrscheinlich ist, dass zwei Relais 6a und 6b gleichzeitig kaputt sind und nicht mehr öffnen, beispielsweise weil die Kontakte verschmolzen sind. Selbstverständlich könnten die Relais 6a und 6b, der Kaltleiter 7 und die Diode 8 auch in der negativen Zuführungsleitung angeordnet sein.

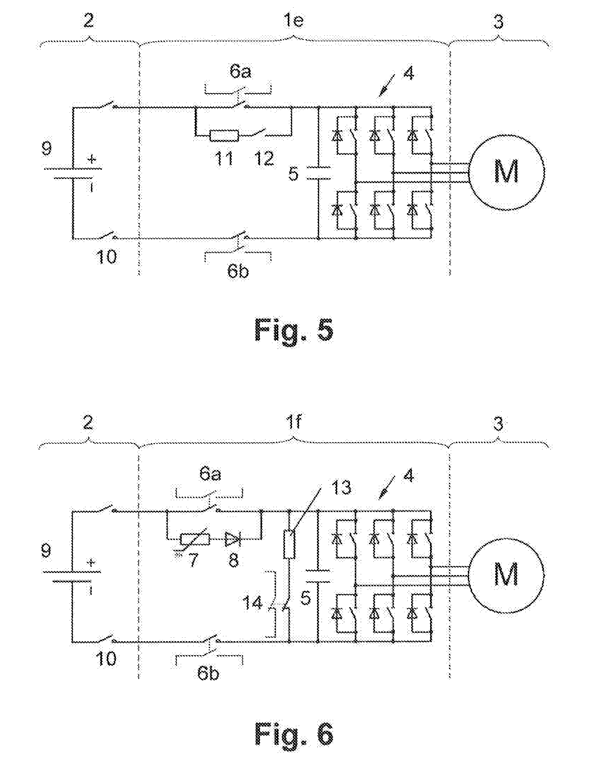

Fig. 5 zeigt einen Umrichter 1e, der wiederum ganz ähnlich wie der Umrichter 1a aufgebaut ist. Im Unterschied dazu ist anstelle des Kaltleiters 7 aber ein ohmscher Widerstand 11 und anstelle der Diode 8 ein zweites Schaltelement 12 vorgesehen. Der Widerstand 11 dient wiederum der Begrenzung des Stroms beim Laden des Zwischenkreiskondensators 5, das zweite Schaltelement 12 verhindert dagegen den Energiefluss von der Wechselstrommaschine 3 zur Spannungsquelle 2. Im Gegensatz zur Diode 8 kann dieser aktiv angesteuert werden, werden, um beispielsweise den Spannungsausgleich zwischen der Spannungsquelle 2 und dem
Zwischenkreiskondensator 5 zu beeinflussen. Das zweite Schaltelement 12 sollte geöffnet bleiben, wenn der besagte Spannungsausgleich in ausreichendem Masse erfolgt ist. Selbstverständlich ist es auch möglich, den Widerstand 11 mit einer Diode 8 oder den Kaltleiter 7 mit einem zweiten Schaltelement 12 zu kombinieren. Zudem könnte das Relais 6a, der Widerstand 11 und das zweite Schaltelement 12 auch in der negativen Zuführungsleitung angeordnet sein.

Fig. 6 zeigt eine weitere Variante der Erfindung in Form eines Umrichters 1f, welcher dem Umrichter 1a sehr ähnlich ist. Im Unterschied dazu ist parallel zum Zwischenkreiskondensator 5 eine Serienschaltung mit einem Widerstand 13 und einem dritten Schaltelement 14 angeordnet ist. Mit Hilfe des Widerstands 13 kann eine Spannung im Zwischenkreis definiert abgebaut werden. Beispielsweise kann so eine Zerstörung der Halbleiterschalter in den Halbbrücken 4 durch eine im generatorischen Betrieb der Wechselstrommaschine 1 erzeugten Spannung vermieden werden. Vorteilhaft ist das Relais 14 mit einem Ruhekontakt ausgerüstet, also "normally closed" (NC), damit der Zwischenkreis auch bei Wegfall einer Energieversorgung sicher entladen wird.

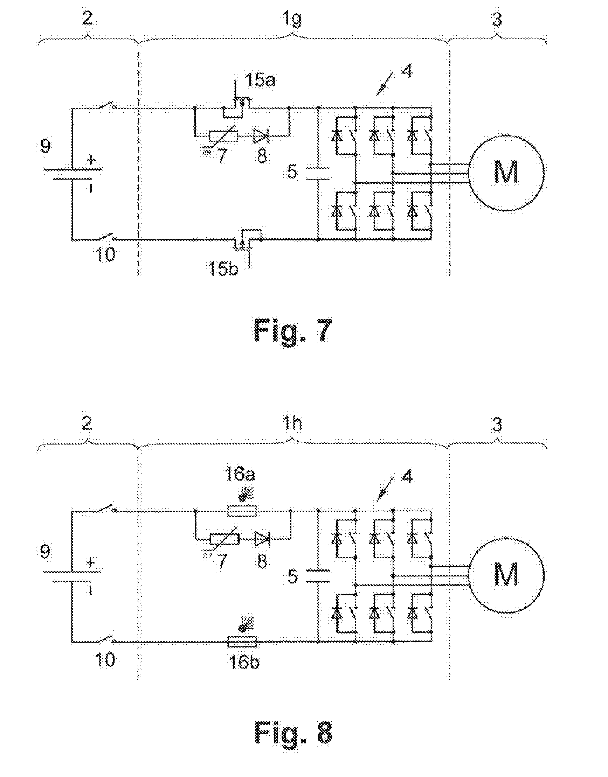

Vorzugsweise weist das Relais 14 zwangsgeführte Rückführkontakte auf. Denkbar wäre auch, dass anstelle des Widerstands 13 ein anderes strombegrenzendes Element vorgesehen ist, beispielsweise ein Kaltleiter. Denkbar wäre aber auch, dass der Widerstand 13 weggelassen wird, wenn der Strom beim Schliessen des Relais 14 nicht zur Zerstörung des Kondensators 5 führt. Zudem wäre vorstellbar, dass anstelle des Relais 14 ein Halbleiterschalter vorgesehen ist (siehe auch Fig. 7). Selbstverständlich könnte das Relais 6a, der Kaltleiter 7 und die Diode 8 auch in der negativen Zuführungsleitung angeordnet sein.

Fig. 7 zeigt einen Umrichter 1g, welcher ähnlich dem Umrichter 1a ist, anstelle der Relais 6a und 6b jedoch Halbleiterschalter 15a und 15b aufweist, beispielsweise MOSFETs (Metal Oxide Semiconductor Field Effect Transistor), IGBTs (Insulated Gate Bipolar Transistor) oder GTOs (Gate Turn-Off Thyristor). Selbstverständlich können die Halbleiterschalter 15a und 15b auch in den in den Figuren 1 bis 6 gezeigten Anordnungen verwendet werden.

Fig. 8 zeigt schliesslich einen Umrichter 1h, welcher ähnlich dem Umrichter 1a ist, anstelle der Relais 6a und 6b jedoch pyrotechnische Sicherheitsschalter (PSS) 16a und 16b aufweist. Selbstverständlich kann der pyrotechnische Sicherheitsschalter auch in den in den Figuren 1 bis 6 gezeigten Anordnungen verwendet werden.

### Bezugszeichenliste

- 1a..1h: Umrichter
- 2: Spannungsquelle
- 3: Wechselstrommaschine
- 4: Halbbrücken
- 5: Zwischenkreiskondensator
- 6a, 6b: erstes Schaltelement
- 7: Kaltleiter (PTC)
- 8: Diode
- 9: Batterie
- 10: Schalter
- 11: ohmscher Widerstand
- 12: zweites Schaltelement
- 13: ohmscher Widerstand
- 14: drittes Schaltelement
- 15a, 15b: Halbleiterschalter
- 16a, 16b: pyrotechnischer Sicherheitsschalter (PSS)

## Patentansprüche

1. Umrichter (1a..1h) zur Ansteuerung einer Wechselstrommaschine (3) umfassend
- wenigstens einen Zwischenkreiskondensator (5),
- zumindest ein erstes Schaltelement (6a, 6b) in einer Zuleitung zum Zwischenkreis und
- ein strombegrenzendes Element (7, 11) parallel zum ersten Schaltelement (6a, 6b),
**gekennzeichnet durch**
ein Sperrelement (8, 12) in Serie zum strombegrenzenden Element (7, 11), welches dazu eingerichtet ist, einen Energiefluss von der Wechselstrommaschine (3) zu einer den Umrichter (1a..1h) versorgenden Spannungsquelle (2) zu verhindern.

2. Umrichter (1a..1h) nach Anspruch 1, **dadurch gekennzeichnet, dass** in beiden Zuleitungen zum Zwischenkreis erste Schaltelemente (6a, 6b) vorgesehen sind.

3. Umrichter (1a..1h) nach Anspruch 1 oder 2, **dadurch gekennzeichnet, dass** eine Serienschaltung umfassend das strombegrenzende Element (7, 11) und das genannten Sperrelement (8, 12) lediglich in einer Zuleitung zum Zwischenkreis vorgesehen ist.

4. Umrichter (1a..1h) nach einem der vorgehenden Ansprüche, **dadurch gekennzeichnet, dass** eine Serienschaltung umfassend das strombegrenzende Element (7, 11) und das genannten Sperrelement (8, 12) parallel zu einer Serienschaltung mehrerer erster Schaltelemente (6a, 6b) vorgesehen ist.

5. Umrichter (1 a..1 h) nach einem der Ansprüche 1 bis 4, **dadurch gekennzeichnet, dass** das genannte Sperrelement als Diode (8) ausgeführt ist.

6. Umrichter (1a..1h) nach einem der Ansprüche 1 bis 4, **dadurch gekennzeichnet, dass** das genannte Sperrelement als zweites Schaltelement (11) ausgeführt ist.

7. Umrichter (1a..1h) nach einem der vorgehenden Ansprüche, **dadurch gekennzeichnet, dass** das erste Schaltelement (6a, 6b) und/oder das zweite Schaltelement (11) als Relais ausgeführt ist.

8. Umrichter (1a..1h) nach einem der vorgehenden Ansprüche, **dadurch gekennzeichnet, dass** das erste Schaltelement (6a, 6b) und/oder das zweite Schaltelement (11) als Halbleiterschalter (15a, 15b) ausgeführt ist.

9. Umrichter (1a..1h) nach einem der vorgehenden Ansprüche, **dadurch gekennzeichnet, dass** das erste Schaltelement (6a, 6b) als pyrotechnischer Sicherheitsschalter (16a, 16b) ausgeführt ist.

10. Umrichter (1a..1h) nach einem der Ansprüche 1 bis 9, **dadurch gekennzeichnet, dass** das strombegrenzende Element als Widerstand (11) ausgeführt ist.

11. Umrichter (1a..1h) nach einem der Ansprüche 1 bis 9, **dadurch gekennzeichnet, dass** das strombegrenzende Element als Kaltleiter (7) ausgeführt ist.

12. Umrichter (1a..1h) nach einem der vorgehenden Ansprüche, **gekennzeichnet durch** eine Serienschaltung umfassend ein drittes Schaltelement (14) und ein strombegrenzendes Element (13) parallel zum Zwischenkreiskondensator (5).
